Europäisches Patentamt

European Patent Office

Office européen des brevets

(19)

(11) Numéro de publication : **0 171 364 B1**

# (12) FASCICULE DE BREVET EUROPÉEN

(45) Date de publication du fascicule du brevet :
**11.10.89**

(51) Int. Cl.⁴ : **A 61 C 13/265**

(21) Numéro de dépôt : **85830142.7**

(22) Date de dépôt : **10.06.85**

(54) **Attelage pour prothèse dentaire partielle, amovible.**

(30) Priorité : **11.06.84 IT 1740684**
**20.11.84 IT 1741384**

(43) Date de publication de la demande :
**12.02.86 Bulletin 86/07**

(45) Mention de la délivrance du brevet :
**11.10.89 Bulletin 89/41**

(84) Etats contractants désignés :
**AT BE CH DE FR GB IT LI LU NL SE**

(56) Documents cités :
**FR--A-- 1 066 607**
**FR--A-- 1 134 137**
**FR--A-- 1 492 847**
**FR--A-- 2 094 650**
**FR--A-- 2 408 342**

(73) Titulaire : **Menicagli, Ivano**
**Via Goito, 157**
**I-57100 Livorno (IT)**

(72) Inventeur : **Menicagli, Ivano**
**Via Goito, 157**
**I-57100 Livorno (IT)**

(74) Mandataire : **Martini, Lazzaro**
**Ufficio Brevetti Ing. Lazzaro Martini Via Brunelleschi,**
**1**
**I-50123 Firenze (IT)**

Jouve, 18, rue St-Denis, 75001 Paris, France

## Description

La présente invention concerne un attelage pour prothèse dentaire partielle, amovible.

On sait qu'une prothèse partielle amovible est utilisée lorsque le nombre et la disposition des dents restantes d'une arcade ne permettent pas le placement d'une prothèse fixe. Une prothèse amovible comprend une gauttière d'appui sur les os de la mâchoire ainsi qu'un système d'ancrage à un pilier au moins, au moyen de crochets ou d'un attelage de précision composé de deux coulisses avec attaches de type mâle-femelle, l'une soudée à une couronne coulée sur la dent pilier et l'autre incorporée à la prothèse.

On connaît plusieurs types d'attelages de précision pour prothèses partielles amovibles, mais les types actuellement connus présentent tous divers inconvénients.

En effet, dans certains de ces attelages connus, la possibilité de régler la force rétentrice entre la coulisse mâle et la coulisse femelle qui permet d'obtenir la contention nécessaire de la prothèse manque totalement. On connaît par le document FR-A-1.134.137 un attelage avec une tête de rétention portée par un arbre monté coulissant dans le perçage de la prothèse pour pouvoir se rapprocher ou s'éloigner de la dent pilier et avec une joue montée coulissante sur cet arbre et poussé vers l'extérieur par un ressort qui s'appuie sur un écrou dont le déplacement permet de régler la tension du ressort. Cet attelage connu requiert néanmoins des opérations d'ajustement répétées et difficiles, qui impliquent de démonter à chaque fois les divers composants et de manœuvrer l'écrou à plusieurs reprises ; dans le cas de prothèse en deux parties avec la dent pilier interposée, cette manœuvre paraît très difficile.

En outre, aucun des attelages pour prothèse amovible actuellement connus ne permet de modifier ses propres caractéristiques de fonctionnement, à savoir de transformer un attelage rigide en attelage semi-rigide ou en attelage élastique, ce qui, au contraire, devient très souvent nécessaire suite à l'affaiblissement ou à la perte d'une des dents piliers.

L'objectif principal de la présente invention est d'éliminer les inconvénients sus-mentionnés.

L'invention, telle qu'elle est caractérisée dans les revendications 1 et 8, résout le problème consistant à réaliser un attelage de précision pour prothèse dentaire partielle amovible, d'emploi aisé et à fonctionnement variable.

Moyennant l'utilisation d'un attelage de ce type, on obtient les résultats suivants : la contention, c'est-à-dire la force rétentrice, est réglable à partir d'un point de la gauttière alvéolaire de la prothèse, par rotation d'un organe autour de son propre axe, qui est incliné par rapport à la direction de translation de l'élément rétenteur de la coulisse incorporée à la prothèse et les caractéristiques de fonctionnement de l'appareil peuvent être modifiées en changeant seulement la conformation de la tête rétentrice qui doit s'insérer dans la coulisse soudée à la dent pilier, et ce sans modifier l'aspect général de la prothèse.

Les avantages obtenus grâce à la présente invention consistent essentiellement dans le fait qu'il est possible de régler avec exactitude la contention de l'ancrage en agissant sur la tête d'une vis qui apparaît à la surface la gauttière alvéolaire de la prothèse ; que ledit réglage est obtenu sans devoir démonter les parties composant la coulisse de l'attelage incorporée à la prothèse ; que les parties composant la coulisse incorporée à la prothèse sont tenues mutuellement en place sans attaches de blocage ; que la gaine de contention des composantes de la coulisse incorporée à la prothèse peut être remplacée en cas d'éventuelle usure par érosion galvanique ; que la tête rétentrice est un élément interchangeable dont la forme est en relation avec la caractéristique de fonctionnement désirée de l'attelage ; que la tête peut être ôtée de l'élément mâle tout en restant attachée à l'élément femelle de l'attelage ; qu'un attelage réalisé conformément à l'invention est de construction simple, d'application facile et de fonctionnement sûr, même après une longue période d'utilisation.

L'invention est exposée ci-dessous plus en détail à l'aide des dessins qui en représentent un mode de réalisation donné à titre exemplatif.

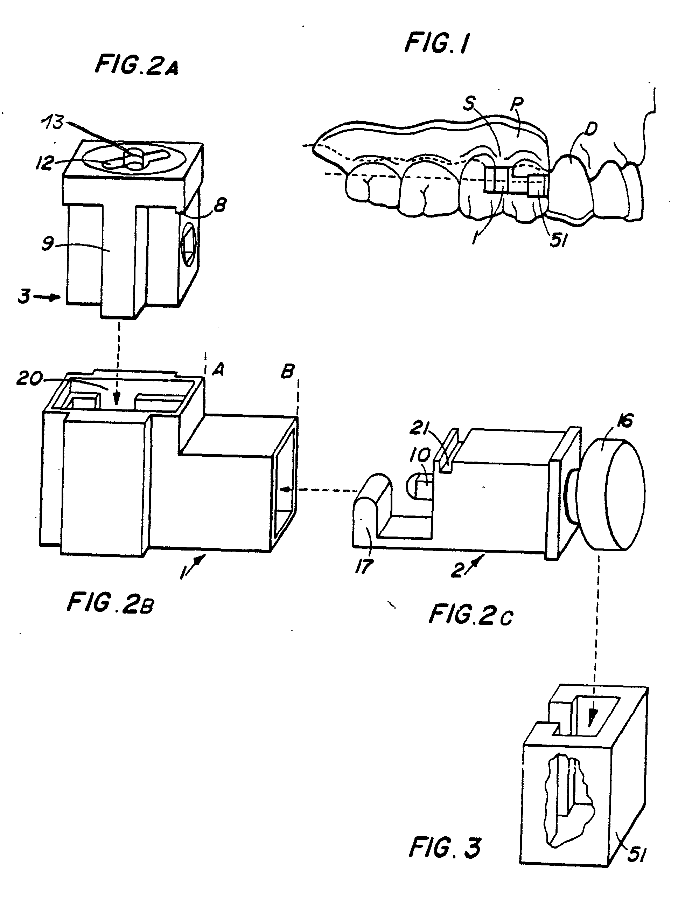

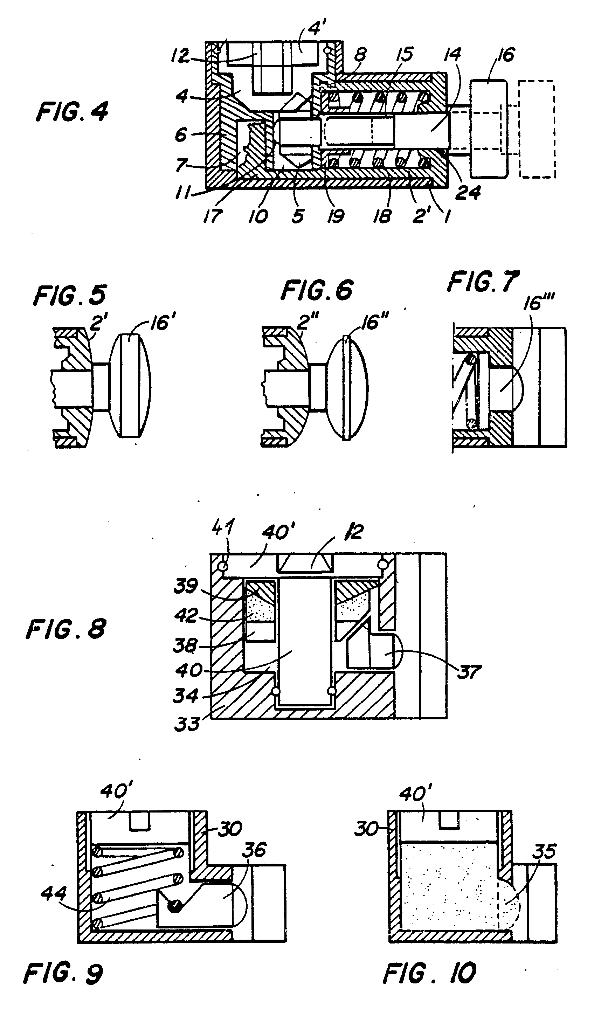

La Figure 1 représente la vue d'ensemble d'une prothèse partielle avec attelage amovible réalisé conformément à l'invention, en position d'utilisation ; les Figures 2A-2B-2C représentent, en perspective axonométrique explosée agrandie, les trois parties composant l'élément mâle de l'attelage de la Figure 1 ; la Figure 3 représente, en perspective axonométrique agrandie, un élément femelle de l'attelage de la Figure 1 ; la Figure 4 représente, en section verticale, les composantes des figures 2A-2B-2C après assemblage, pour former un attelage rigide ; la Figure 5 représente le détail d'une tête rétentrice pour former un attelage semi-rigide ; la Figure 6 représente le détail d'une tête rétentrice pour former un attelage élastique ; la Figure 7 représente le détail d'une tête rétentrice à poussoir ; la Figure 8 représente, en section verticale, les composantes de l'élément femelle, pour former un attelage à poussoir simplifié, conformément à l'invention ; la Figure 9 représente, en section verticale, les composantes de l'élément femelle, pour former un autre attelage à poussoir, simplifié, conformément à l'invention ; la Figure 10 représente, en section verticale, l'élément femelle d'un attelage à poussoir, ultérieurement simplifié.

L'attelage pour prothèse amovible illustré dans les figures ci-jointes est composé d'un élément à coulisse, destiné à être intégré à la prothèse, et d'un élément à coulisse, destiné à être fixé, de façon traditionnelle, sur une dent pilier.

Ledit élément destiné à être intégré à la prothèse comprend essentiellement :

— une tête 2 d'attache à l'élément femelle de l'attelage ;

— un carter 3 de réglage de la force de rétention ;

— une enveloppe 1 de la tête 2 et carter 3.

Plus précisément, la tête 2 comprend une gaine 2' carter, ouverte à l'une de ses extrémités verticales et avec un trou central, en correspondance avec l'autre extrémité verticale ; cette gaine peut être placée, avec précision, dans l'aile horizontale de l'enveloppe 1 et est munie d'un rebord 17 et d'une rainure 21 ; un pivot axial 14 avec filetage 15 passe dans le dit trou 24, en s'intégrant à une tête externe, rétentrice 16 et sort, à l'extrémité opposée de la gaine, avec une pointe 10, contracturée et à section carrée pour y monter un engrenage conique 5 ; sur le filetage 15 dudit pivot 14 est vissée une plaque 19, carrée, avec interposition d'un ressort 18.

Le carter 3 susmentionné comprend un corps 6 muni de deux coulisses longitudinales 9, d'une saillie transversale 8, destinée à s'insérer dans la rainure 21 correspondante de la tête 2, et d'une cavité 7 où devrait s'insérer le rebord correspondant 17 de la tête 2 ; ledit corps 6 est en outre opportunément creusé de façon à pouvoir contenir un corps cylindrique 4' muni dans sa partie inférieure d'un engrenage conique 4 destiné à retenir l'engrenage conique 5 susmentionné ; ledit corps 4' est en outre muni d'une encoche 12 permettant de commander la rotation du pignon 4 et d'un filetage interne 13 permettant de faciliter l'extraction du carter 3 de l'enveloppe 1.

Ladite enveloppe est un corps boîtier à section carrée et à développement à angle droit, ouvert à son extrémité supérieure horizontale et à son extrémité latérale verticale, pourvu de deux rainures verticales 20 permettant l'insertion des coulisses 9 correspondantes du carter 3 ; ses deux ailes, l'horizontale et la verticale, permettent l'insertion, respectivement, de la tête 2 et du carter 3, lesquels doivent être insérés dans cet ordre. Pour démonter l'appareil, on extrait d'abord le carter 3 puis la tête 2.

Le réglage de la force rétentrice a lieu en faisant pivoter le pignon 4, dans un sens ou dans l'autre, en agissant avec un tournevis sur l'encoche 12 du corps 4', en effet, en agissant ainsi, on provoque la rotation du pignon 5 et du pivot 14 ainsi que la translation simultanée de la plaque 19 le long de l'axe du pivot 14, et cette dernière, en comprimant, plus ou moins, le ressort 18, détermine la force de traction souhaitée de la tête 16.

Conformément à l'invention, il est prévu que l'axe de rotation du pignon 4 soit incliné par rapport à l'axe du pivot 14, selon un angle égal ou non à 90°, de manière toutefois que la base du corps 4' avec l'encoche 12 affleure à la surface la gauttière alvéolaire de la prothèse.

En outre, les axes du pignon 4 et du pivot 14 avec la tête rétentrice 16 peuvent être en oblique l'un par rapport à l'autre, c'est-à-dire qu'ils peuvent ne pas se trouver dans le même plan ; dans ce cas la transmission du mouvement sera obtenue au moyen d'une vis sans fin, en lieu et à la place du pignon 4, et d'une roue à dents hélicoïdales en lieu et à la place du pignon 5.

Conformément à l'invention, il est également prévu de réduire le développement de l'aile horizontale A-B de la coulisse à incorporer à la prothèse, en tenant le pivot 14, le ressort 18 et la plaque 19 dans la partie inférieure du carter 3.

En ce qui concerne la tête rétentrice proprement dite et la tête de la gaine de la tête 2, il est nécessaire, au préalable, de décider la fonction que l'attelage doit remplir.

En cas d'attelage rigide, la tête 16 sera cylindrique et à bases planes et la tête de la gaine sera plane, comme le montre la Figure 4 des dessins ci-joints, de sorte que la tête 16 puisse s'insérer dans la gorge de la coulisse femelle de l'attelage, sans possibilité de mouvement.

En cas d'attelage semi-rigide, la tête 16' sera cylindrique et à bases légèrement convexes et la tête 2' de la gaine 2 sera légèrement convexe, comme le montre la figure 5 des dessins ci-joints, de sorte que la tête puisse s'insérer dans la gorge de la coulisse femelle de l'attelage, avec une certaine possibilité, limitée, de rotation.

En cas d'attelage élastique, c'est-à-dire à charnière, avec rotation verticale et horizontale, la tête 16'' sera cylindrique avec bases fortement convexes et la tête 2'' de la gaine 2 sera fortement convexe, comme le montre la Figure 6 des dessins ci-joints, de sorte que la tête 16 puisse s'insérer dans la gorge de la coulisse femelle de l'attelage avec une grande liberté de rotation.

En outre, la tête rétentrice 16 avec son pivot correspondant 14 peut être remplacée par un poussoir 16''', comme le montre la Figure 7 des dessins ci-joints.

Dans le cas particulier d'un attelage dont le dispositif rétenteur est en forme de poussoir, il est possible, conformément à l'invention et comme le montre la Figure 8 des dessins ci-joints, de réduire la coulisse de l'attelage, qui doit être incorporée à la prothèse, à une gaine 33, avec cavité 34 cylindrique, ouverte dans sa partie supérieure et avec un trou latéral pour faire passer la tête du poussoir 37 ; ce dernier a un de ses flancs incliné à gauche vers le bas ; celui-ci se trouve en contact avec une plaque 38 émoussée de façon spéculaire sur laquelle agit une virole 39, vissée sur le pivot 40 du corps cylindrique 40', avec interposition d'un coussinet 42 en matière élastique. Ledit corps 40' et ledit pivot 40 sont opportunément liés au boîtier 30, au moyen d'engins connus comme tels, comme par exemple des anneaux élastiques 41. Ledit corps 40 est en outre muni d'une encoche 42 en queue d'aronde, permettant d'en commander la rotation et d'obtenir son extraction du boîtier 30.

Dans une première version simplifiée, il est prévu, de substituer le pivot 40, avec sa virole 39, son coussinet 42 et sa plaque 38, montrés à la Figure 8 des dessins ci-joints, par un ressort 44, agissant dans le bas sur une dent inclinée du poussoir 36 et par un corps 40' relié au boîtier 30 au moyen d'un filetage (Figure 9).

Dans une version encore plus simplifiée, il est prévu, comme le montre la Figure 10, de remplacer le ressort 44 et le poussoir 36 de l'attelage de la Figure 9, par un petit bloc 35 de matériel élastique comprenant le poussoir.

**Revendications**

1. Un attelage pour prothèse dentaire partielle amovible à deux coulisses (1, 51) l'une (51) fixée sur une dent pilier (D) et l'autre (1) incorporée à la prothèse (P) et comprenant une tête de rétention ayant la forme d'une petite tête cylindrique (16, 16', 16'') ou d'un poussoir (16''') et faisant saillie latéralement sur la prothèse pour s'insérer dans la coulisse (51) fixée sur la dent pilier (D) et poussée contre ladite coulisse (51) par un ressort (18), caractérisé par le fait que la coulisse (1) incorporée à la prothèse (P) comprend un corps cylindrique (4') tournant autour de son axe qui est incliné par rapport à la direction de translation de la tête de rétention (16) et relié à celle-ci de manière telle qu'à la rotation dudit corps cylindrique (4') dans un sens ou dans l'autre la force dudit ressort (18) prévu entre ledit corps cylindrique et ladite tête de rétention est réglée provoquant ainsi une force rétentrice respectivement, majeure ou mineure de l'attelage.

2. Un attelage conforme à la revendication 1, caractérisé par le fait que ledit corps cylindrique (4') comprend un engrenage conique (4) et est assemblé dans un carter (3) avec une base qui affleure sur la gauttière alvéolaire de la prothèse (P) et est muni d'une encoche (12) de mise en fonction.

3. Un attelage conforme à la revendication 1, caractérisé par le fait que l'axe dudit corps cylindrique (4') et la direction de translation de la tête de rétention (16) forment ou non un angle à 90° et se trouvent ou non dans le même plan.

4. Un attelage conforme à la revendication 1, caractérisé par le fait que ladite tête de rétention (16) fait support sur un pivot (14) fileté, comportant un engrenage conique (5) pour engager ledit engrenage conique (4) du corps cylindrique (4') et une plaque (19) intermédiaire pour tendre ledit ressort (18) et est monté dans une gaine (2).

5. Un attelage conforme aux revendications 2 et 4, caractérisé par le fait que ledit carter (3) et ladite gaine (2) sont contenus dans une coulisse (1) en forme de boîtier à section carrée et à développement en équerre, ouvert à ses deux extrémités qui sont perpendiculaires entre elles.

6. Un attelage conforme à la revendication 1, caractérisé par le fait que ladite tête de rétention (16) a ses bases planes de façon à permettre, dans la coulisse femelle (51) fixée sur la dent pilier, une attache à emboîtement et de ce fait à réaliser un attelage rigide.

7. Un attelage conforme à la revendication 1, caractérisé par le fait que ladite tête de rétention (16) a ses bases légèrement ou fortement convexes de façon à permettre, dans la coulisse (51) qui est fixée sur la dent pilier (D), une attache à charnière et de ce fait à réaliser un attelage respectivement, semi-rigide ou élastique.

8. Un attelage pour prothèse dentaire partielle amovible à deux coulisses (1, 51) l'une (51) fixée sur une dent pilier (D) et l'autre (1) incorporée à la prothèse (P) et comprenant une tête de rétention à poussoir (36, 37) faisant saillie latéralement sur la prothèse pour s'insérer dans la coulisse (51) fixée sur la dent pilier (D) et poussée contre ladite coulisse (51), caractérisé par le fait que la coulisse (1) incorporée à la prothèse (P) comprend un corps cylindrique (40') tournant autour de son axe et se mouvant le long de celui-ci qui est incliné par rapport à la direction de translation de la tête de rétention à poussoir (36, 37) et relié à ce dernier par interposition des organes élastiques antagonistes (42, 44, 35) de manière telle qu'au déplacement dudit corps cylindrique (40') dans un sens ou dans l'autre le long de son axe correspond une force rétentrice respectivement, majeure ou mineure de l'attelage.

9. Un attelage conforme à la revendication 8, caractérisé par le fait que ledit corps cylindrique (40') comprend un pivot (40) fileté, retenant une virole (39) dont la translation le long du pivot (40) détermine la mise en fonction du poussoir (37) lequel est muni d'un flanc incliné, par l'intermédiaire d'un petit bloc annulaire (38) émoussé de façon spéculaire et d'un anneau (42) en matière élastique.

10. Un attelage conforme à la revendication 8, caractérisé par le fait que ledit corps cylindrique (40') est vissé dans une gaine (30) qui est associée à la coulisse (1) et que le poussoir (36) est muni d'un flanc incliné qui permet sa mise en fonction au moyen d'un ressort (44) interposé.

11. Un attelage conforme à la revendication 8, caractérisé par le fait que le poussoir est constitué d'un petit bloc (35) en matière élastique qui est mis en fonction directement par ledit corps cylindrique (40').

**Claims**

1. A fitting for partial dental prosthesis (dentures) movable on two runners (1, 51), both of them (1) incorporated in the prosthesis (P) and fixed on a supporting tooth (D) consisting of a retaining head having the form of a small cylindrical head (16, 16', 16'') or a button (16''') and projecting laterally on the prosthesis to insert it in the runners (51) fixed on a supporting tooth (D) and pushed against the said runners (15) by a spring (18), characterized by the fact that the runner (1) incorporated in the prosthesis (P) contains a cylindrical body (4') turning around its axis, which is inclined relative to the direction of translation of the retaining head (16) and connected to it in such a way that in the rotation of the said cylindrical body (4') in one or other direction the said spring force (15) provided between the said cylindrical body and the said retaining head is controlled, thus producing a retaining force of the fitting, which is respectively greater or lesser.

2. A fitting in accordance with claim 1, characterized by the fact that the said cylindrical body (4') contains a conical gearing (4) and is assembled in a gearbox (3) with a base which shows through the surface on the cavity of the prosthesis (P) and has an operating notch (12) on it.

3. A fitting in accordance with claim 1, characterized by the fact that the axis of the said cylindrical body (4') and the direction of translation of the retaining head (16) form an angle of 90° and are situated in the same place, or not.

4. A fitting in accordance with claim 1, characterized by the fact that the said retaining head (16) is supported on a threaded pivot (14) consisting of conical gearing (5) to engage the said conical gearing (4) of the cylindrical body (4') and an intermediate plate (19) to tighten the said spring (18) and is mounted on a sheath (2).

5. A fitting in accordance with claims 2 and 4, characterized by the fact that the said gearbox (3) and the said sheath (2) are contained in runners (1) in the form of a bearing of square section and with an angled development, open at the two ends, which are perpendicular to each other.

6. A fitting in accordance with claim 1, characterized by the fact that the said retaining head (16) has plane bases so as to permit, in the female runner (51) fixed on the supporting tooth, a joint attachment and to provide a rigid fitting.

7. A fitting in accordance with claim 1, characterized by the fact that the said retaining head (16) has the bases made slightly or very convex, so as to permit, in the runners (51) fixed on the supporting tooth (D), a hinged attachment and due to this to produce a semi-rigid or elastic fitting respectively.

8. A fitting for partial dental prosthesis (dentures) movable on two runners (1, 51), both of them (1) incorporated in the prosthesis (P) and fixed on a supporting tooth (D), containing a pusher retaining head (36, 37) to insert in the runners (51) fixed on the supporting tooth (D) and pushed against the said runners (51), characterized by the fact that the runners (1) incorporated in the prosthesis (P) contain a cylindrical body (40') turning around its axis and moving along it which is inclined relative to the direction of translation of the pusher retaining head (36, 37) and connected to the latter by the interposition of opposite elastic organs (42, 44, 35) in such a way that the displacement of the said cylindrical body (40') in one or other direction along its axis corresponds to a retention force of the fitting which is greater or lesser respectively.

9. A fitting in accordance with claim 8, characterized by the fact that the said cylindrical body (40') contains a threaded pivot (40), has a ferrule (39) whose translatory movement along the pivot (40) determines the operation of the pusher (37), which is mounted on an inclined flank by the interposition of a small annular block (38) blunted in a mirror-like form and a ring (42) made of elastic material.

10. A fitting in accordance with claim 8, characterized by the fact that the said cylindrical body (40') is screwed into a sheath (30) which is associated with the runners (1) and that the pusher (36) is mounted on an inclined flank which enables it to work by means of an interposed spring (44).

11. A fitting in accordance with claim 8, characterized by the fact that the pusher consists of a small block (35) of elastic material which is directly operated by the said cylindrical body (40').

**Patentansprüche**

1. Verankerung für eine herausnehmbare Zahnteilprothese mit zwei Gleitstücken (1, 51), von denen das eine (51) an einem Stützzahn (D) befestigt ist und das andere (1) in die Prothese (P) eingefügt ist, und einen Haltekopf aufweist, der die Form eines kleinen zylindrischen Kopfes (16, 16', 16") oder Knopfes (16''') hat und seitlich zur Prothese vorsteht, um in das fest am Stützzahn (D) angeordnete Gleitstück (51) einzugreifen und durch eine Feder (18) gegen das Gleitstück (51) geschoben zu werden, dadurch gekennzeichnet, daß das in die Prothese (P) eingefügte Gleitstück (1) einen zylindrischen Körper (4') aufweist, der sich um seine, gegen die Verschieberichtung des Haltekopfes (16) geneigte Achse dreht und mit dieser derart verbunden ist, daß bei der Drehung des zylindrischen Körpers (4') in der einen oder anderen Richtung die Kraft der zwischen dem zylindrischen Körper und dem Haltekopf vorgesehenen Feder (18) geregelt wird, wodurch so eine größere bzw. kleinere Haltekraft der Verankerung hervorgerufen wird.

2. Verankerung nach Anspruch 1, dadurch gekennzeichnet, daß der zylindrische Körper (4') eine konische Verzahnung (4) aufweist und in einem Gehäuse (3) mit einer Basis versehen ist, die mit der Höhlung der Prothese (P) fluchtet und mit einer Ausnehmung (12) zur Betätigung versehen ist.

3. Verankerung nach Anspruch 1, dadurch gekennzeichnet, daß die Achse des zylindrischen Körpers (4') und die Verschieberichtung des Haltekopfes (16) einen Winkel von 90° bilden oder auch nicht und sich in der gleichen Ebene oder auch nicht befinden.

4. Verankerung nach Anspruch 1, dadurch gekennzeichnet, daß der Haltekopf (16) den Träger für einen Schraubbolzen (14) bildet, der eine konische Verzahnung (5) zum Eingriff mit der konischen Verzahnung (4) des zylindrischen Körpers (4') und eine Zwischenplatte (19) zum Spannen der Feder (18) umfaßt, und in einer Hülse (2) angeordnet ist.

5. Verankerung nach den Ansprüchen 2 und 4, dadurch gekennzeichnet, daß das Gehäuse (3) und die Hülse (2) in einem Gleitstück (1) in Form einer Umhüllung mit quadratischem Querschnitt und mit einer gewinkelten Abwicklung enthalten sind, wobei zwei zueinander senkrecht stehende Enden offen sind.

6. Verankerung nach Anspruch 1, dadurch gekennzeichnet, daß der Haltekopf (16) ebene Flächen hat, um so im auf dem Stützzahn befestigten, hohlen Gleitstück (51) eine ineinandergreifende Befestigung zu gestatten und dadurch eine starre Verankerung zu bilden.

7. Verankerung nach Anspruch 1, dadurch gekennzeichnet, daß der Haltekopf (16) leicht oder stark konvexe Flächen hat, um so im am Stützzahn (D) befestigten Gleitstück (51) eine scharnierartige Befestigung zu gestatten und dadurch eine halbstarre bzw. elastische Verankerung zu bilden.

8. Verankerung für eine herausnehmbare Zahnteilprothese mit zwei Gleitstücken (1, 51), von denen das eine (51) an einem Stützzahn (D) befestigt ist und das andere (1) in die Prothese (P) eingefügt ist und einen knopfartigen Haltekopf (36, 37) besitzt, der seitlich über die Prothese vorsteht, um in das am Stützzahn (D) befestigte Gleitstück (51) eingefügt und gegen das Gleitstück (51) geschoben zu werden, dadurch gekennzeichnet, daß das in die Prothese (P) eingefügte Gleitstück (1) einen zylindrischen Körper (40') besitzt, der sich um seine Achse dreht und sich entlang dieser bewegt, wobei diese gegenüber der Verschieberichtung des knopfartigen Haltekopfes (36, 37) geneigt ist und mit dieser durch Anordnung entgegenwirkender, elastischer Organe (42, 44, 35) derartig verbunden ist, daß bei Verschiebung des zylindrischen Körpers (40') in der einen oder anderen Richtung entlang der Achse einer größeren oder kleineren Haltekraft der Verankerung entspricht.

9. Verankerung nach Anspruch 8, dadurch gekennzeichnet, daß der zylindrische Körper (40') einen Schraubzapfen (40) aufweist, der einen Ring (39) hält, dessen Verschiebung entlang des Zapfens (40) die Einschaltung des Knopfes (37) bestimmt, der mit einer geneigten Flanke über einen kleinen ringförmigen Block (38), der spiegelförmig abgekantet ist und einen Ring (42) aus elastischem Material trägt, versehen ist.

10. Verankerung nach Anspruch 8, dadurch gekennzeichnet, daß der zylindrische Körper (40') in eine Ausnehmung (30) eingeschraubt ist, die dem Gleitstück (1) zugeordnet ist, und daß der Knopf (36) mit einer geneigten Flanke ausgerüstet ist, die mittels einer zwischengeschalteten Feder (44) seine Betätigung gestattet.

11. Verankerung nach Anspruch 8, dadurch gekennzeichnet, daß der Knopf durch einen kleinen Block (35) aus elastischem Material gebildet ist, der direkt durch den zylindrischen Körper (40') betätigt wird.

FIG.1

FIG.2A

FIG.2B

FIG.2C

FIG.3

FIG.4

FIG.5

FIG.6

FIG.7

FIG.8

FIG.9

FIG.10